# EUROPÄISCHE PATENTSCHRIFT

(11) **EP 3 677 002 B1**
(45) Veröffentlichungstag und Bekanntmachung des Hinweises auf die Patenterteilung: **19.10.2022**
(21) Anmeldenummer: 18737630.6
(22) Anmeldetag: 12.07.2018
(51) Int. Cl.: H04L 45/24, H04L 47/125, H04L 69/14

(54) **VERFAHREN UND ANORDNUNG ZUR PAKETVERMITTELTEN DATENÜBERTRAGUNG ZWISCHEN SEESEITIGEN SENDE-EMPFANGS-EINRICHTUNGEN AUF EINEM WASSERFAHRZEUG UND LANDSEITIGEN SENDE-EMPFANGS-EINRICHTUNGEN ÜBER LUFTSCHNITTSTELLEN**
METHOD AND ARRANGEMENT FOR PACKET-SWITCHED DATA TRANSMISSION BETWEEN WATER-SIDE TRANSMITTER-RECEIVER DEVICES ON A WATERCRAFT AND LAND-SIDE TRANSMITTER-RECEIVER DEVICES VIA AIR INTERFACES
PROCÉDÉ ET AGENCEMENT DE TRANSMISSION DE DONNÉES COMMUTÉES PAR PAQUET ENTRE DES DISPOSITIFS ÉMETTEURS-RÉCEPTEURS CÔTÉ MER SUR UN VÉHICULE NAUTIQUE ET DES DISPOSITIFS ÉMETTEURS-RÉCEPTEURS CÔTÉ TERRE À L'AIDE D'INTERFACES AÉRIENNES

(30) Priorität: 28.08.2017 LU 100376
(43) Veröffentlichungstag der Anmeldung: 08.07.2020
(73) Patentinhaber: thyssenkrupp Marine Systems GmbH, 24143 Kiel (DE); thyssenkrupp AG, 45143 Essen (DE)
(72) Erfinder: HEUCK, Christoph, 22851 Norderstedt (DE)
(74) Vertreter: thyssenkrupp Intellectual Property GmbH
(86) Internationale Anmeldenummer: PCT/EP2018/068983
(87) Internationale Veröffentlichungsnummer: WO 2019/042645

(56) Entgegenhaltungen:
- WO-A1-2017/111778
- US-A1- 2012 023 252
- US-A1- 2017 078 890

## Beschreibung

Die Erfindung betrifft ein Verfahren sowie eine Anordnung zur paketvermittelten Datenübertragung zwischen seeseitigen Sende-Empfangs-Einrichtungen auf einem Wasserfahrzeug und landseitigen Sende-Empfangs-Einrichtungen über Luftschnittstellen.

Die paketvermittelte Datenübertragung wird in verschiedenen Systemen zum Übertragen von Daten zwischen Sendern und Empfängern genutzt, wozu beispielsweise die satellitengestützte Datenkommunikation oder die Nutzung der Mobilfunknetze gehören. Sender und / oder Empfänger können als Sende-Empfangs-Einrichtungen ausgeführt sein, welche auch als Transceiver bezeichnet werden. In Verbindung mit der paketvermittelten Datenübertragung zwischen seeseitigen Sende-Empfangs-Einrichtungen auf einem Wasser- oder Seefahrzeug und landseitigen Sende-Empfangs-Einrichtungen über Luftschnittstellen ist bekannt, mithilfe von Routern schiffsseitig die zu übertragenen Datenpakete einer vorbestimmten Reihenfolge oder Priorität der seeseitigen Sende-Empfangs-Einrichtungen entsprechend hierauf zu verteilen und zu übertragen. Hierzu können statische Metriken genutzt werden, die eine feststehende statische Konfiguration der Lastverteilung für die zur paketvermittelten Datenübertragung genutzten Übertragungskanäle bestimmen.

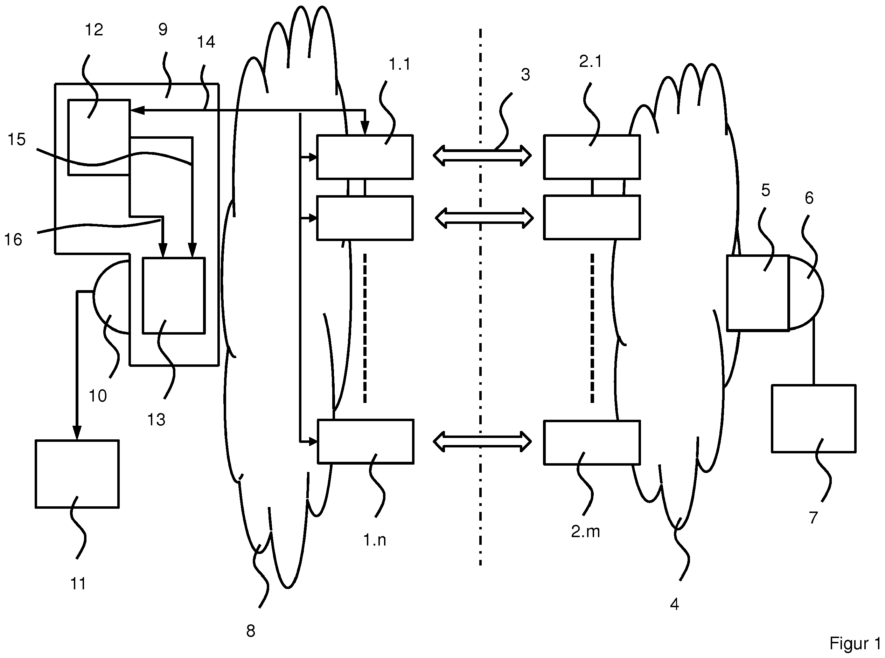

In WO 2017111778 A1 wird ein Kommunikations-Netzwerk 100 beschrieben, welches ein radio access network (RAN) umfasst. Dieses RAN umfasst mehrere Basisstationen 120 und mehrere mobile Geräte 140, die drahtlos Daten miteinander austauschen können. Figur 4 zeigt den Datenaustausch zwischen einem originator 404 und einem recipient 418. Beim "upload" fungiert ein mobiles Gerät 140 als originator 404 und eine Basisstation 120 als recipient 418, beim "download" sind die Rollen vertauscht. Der originator 404 besitzt einen 406, ein block acknowledgement module 408, zwei parallel angeordnete aggregation and transmission modules 410 und 412 sowie zwei parallel angeordnete radio frequency (RF) circuits 414 und 416. Das aggregation and transmission module 410 nutzt ein zweites Übertragungsprotokoll, hier WiGiG, das aggregation and transmission module 412 ein erstes Übertragungsprotokoll, hier Wi-Fi. Jedes aggregation and transmission module 410, 412 steuert jeweils einen RF circuit 414, 416 an, der dann data frames mit 60 GHz bzw. 5 GHz sendet. Ein load balancing module 406 entscheidet, welcher Prozentsatz der data frames gemäß dem ersten Übertragungsprotokoll übermittelt wird, z.B. 25%, und der Rest wird gemäß dem zweiten Übertragungsprotokoll übermittelt. Das block acknowledgement module 408 steuert die Module 410 und 412 entsprechend an. Das load balancing module 406 vermag mindestens ein Übertragungsprotokoll zu ermitteln, welche Qualität der dazugehörige Übertragungskanal hat (to calculate channel quality), beispielsweise die Last auf dem Kanal, die Verfügbarkeit, die Verbindungsqualität, die Signalstärke und statistische Erfolgsquoten bei der Datenübertragung. Hierfür erhält das load balancing module 406 Rückmeldungen vom recipient 418. Falls beispielsweise der Übertragungskanal für das zweite Übertragungsprotokoll WiGiG schlicht ist, veranlasst das load balancing module 406, dass eine größere Menge von data frames über den Übertragungskanal für das erste Übertragungsprotokoll Wi-Fi übertragen werden.

In US 2017078890 A1 wird ein Netzwerk 100 beschrieben, in dem Daten drahtlos per Mobilfunk-Standards (cellular communications) übermittelt werden. Das Netzwerk 100besitzt ein Benutzer-Endgerät (user equipment, UE 110), ein ein Radionetzwerk (E-UTRAN Node B, eNB 120 (E-UTRAN = evolved universal terrestrial radio access network) und zwei Gateways: ein serving gateway (S-GW) 130 und ein packet data network (PDN) gateway (PDN GW, or P-GW) 140. Das Endgerät 110 tauschte Daten mit dem Radio Netzwerk 120 über eine Luftschnittstelle Uu aus, die auch als cellular link, WWAN link, an LTE link oder 3GPP link bezeichnet werden kann und gemäß dem 3GPP Standard für drahtlose LTE-Netze ausgelegt ist. Ein cross-layer bearer splitting system 200 kann vom Endgerät 110 für uplink bearer splitting and cross-RAT retransmission oder vom Radio Netzwerk 120 für downlink bearer splitting and cross-RAT retransmission benutzt werden, RAT bedeutet radio access technology. Ein link aggregation transmitter 210 führt ein bearer splitting and cross-RAT retransmission, und entscheidet dabei, ob ein Datenpaket (genauer: ein protocol data unit, PDU 218) zu einem WWAN stack 212 oder über einen WLAN adaptation layer 216 zu einem WLAN stack 214 geleitet wird. Figur 5a bis Fig. 5c zeigt ein Flussdiagramm für eine Datenübermittlung.

Aufgabe der Erfindung ist es, ein Verfahren sowie eine Anordnung zur paketvermittelten Datenübertragung zwischen seeseitigen Sende-Empfangs-Einrichtungen auf einem Wasserfahrzeug und landseitigen Sende-Empfangs-Einrichtungen über Luftschnittstellen anzugeben, mit denen für Wasserfahrzeuge im Betrieb eine verbesserte paketvermittelte Datenkommunikation ermöglicht ist.

Zur Lösung sind ein Verfahren sowie eine Anordnung zur paketvermittelten Datenübertragung zwischen seeseitigen Sende-Empfangs-Einrichtungen auf einem Wasserfahrzeug und landseitigen Sende-Empfangs-Einrichtungen über Luftschnittstellen nach den unabhängigen Ansprüchen 1 und 12 geschaffen. Alternative Ausgestaltungen sind Gegenstand von abhängigen Unteransprüchen.

Nach einem Aspekt der Erfindung wird ein Verfahren zur paketvermittelten Datenübertragung zwischen seeseitigen Sende-Empfangs-Einrichtungen auf einem Wasserfahrzeug und landseitigen Sende-Empfangs-Einrichtungen über Luftschnittstellen geschaffen. Bei dem Verfahren werden seeseitige Sende-Empfangs-Einrichtungen auf einem Wasserfahrzeug und landseitige oder landgestützte Sende-Empfangs-Einrichtungen bereitgestellt. Daten werden von den seeseitigen Sende-Empfangs-Einrichtungen an die landseitigen Sende-Empfangs-Einrichtungen in einem ersten Betriebsmodus paketvermittelt übertragen, bei dem eine erste Menge von paarweise ausgebildeten Datenkommunikations-Verbindungen über erste Luftschnittstellen zwischen den seeseitigen Sende-Empfangs-Einrichtungen und den landseitigen Sende-Empfangs-Einrichtungen zur paketvermittelten Datenübertragung genutzt und sendeseitig für zu übertragende Datenpakete eine erste Lastverteilung zwischen den seeseitigen Sende-Empfangs-Einrichtungen angewendet wird. Es werden geänderte Übertragungsbedingungen für die erste Menge von paarweise ausgebildeten Datenkommunikations-Verbindungen bestimmt, also konkret für eine oder mehrere Datenkommunikations-Verbindungen aus der ersten Menge von paarweise ausgebildeten Datenkommunikations-Verbindungen. Als Reaktion auf das Bestimmen der geänderten Übertragungsbedingungen werden Daten von den seeseitigen Sende-Empfangs-Einrichtungen an die landseitigen Sende-Empfangs-Einrichtungen in einem zweiten Betriebsmodus paketvermittelt übertragen, bei dem eine zweite Menge von paarweise ausgebildeten Datenkommunikations-Verbindungen über zweite Luftschnittstellen zwischen den seeseitigen Sende-Empfangs-Einrichtungen und den landseitigen Sende-Empfangs-Einrichtungen zur Datenübertragung genutzt und sendeseitig für zu übertragende Datenpakete eine zweite Lastverteilung zwischen den seeseitigen Sende-Empfangs-Einrichtungen genutzt wird.

Die zweite Menge und die erste Menge von paarweise ausgebildeten Datenkommunikations-Verbindungen und / oder die erste Lastverteilung und die zweite Lastverteilung sind voneinander verschiedene. Dies kann folgende Situationen umfassen:
- Die erste Menge ist eine Teilmenge der zweiten Menge. Die zweite Menge ist eine Teilmenge der ersten Menge.
- Die erste Menge und die zweite Menge haben kein gemeinsames Element.
- Die erste Menge und die zweite Menge haben mindestens ein gemeinsames Element, mindestens ein Element der ersten Menge gehört nicht zur zweiten Menge, und mindestens ein Element der zweiten Menge gehört nicht zur ersten Menge.

Nach einem weiteren Aspekt ist eine Anordnung zur paketvermittelten Datenübertragung mit seeseitigen Sende-Empfangs-Einrichtungen auf einem Wasserfahrzeug und landseitigen Sende-Empfangs-Einrichtungen über Luftschnittstellen geschaffen. Die seeseitigen Sende-Empfangs-Einrichtungen und die landseitigen Sende-Empfangs-Einrichtungen sind eingerichtet, über Luftschnittstellen ein Verfahren zur paketvermittelten Datenübertragung auszuführen. Daten werden von den seeseitigen Sende-Empfangs-Einrichtungen an die landseitigen Sende-Empfangs-Einrichtungen in einem ersten Betriebsmodus paketvermittelt übertragen, bei dem eine erste Menge von paarweise ausgebildeten Datenkommunikations-Verbindungen über erste Luftschnittstellen zwischen den seeseitigen Sende-Empfangs-Einrichtungen und den landseitigen Sende-Empfangs-Einrichtungen zur paketvermittelten Datenübertragung genutzt wird und sendeseitig für zu übertragende Datenpakete eine erste Lastverteilung zwischen den seeseitigen Sende-Empfangs-Einrichtungen angewendet wird. Es werden geänderte Übertragungsbedingungen für die erste Menge von paarweise ausgebildeten Datenkommunikations-Verbindungen bestimmt. Als Reaktion auf das Bestimmen der geänderten Übertragungsbedingungen werden Daten von den seeseitigen Sende-Empfangs-Einrichtungen an die landseitigen Sende-Empfangs-Einrichtungen in einem zweiten Betriebsmodus paketvermittelt übertragen, bei dem eine zweite Menge von paarweise ausgebildeten Datenkommunikations-Verbindungen über zweite Luftschnittstellen zwischen den seeseitigen Sende-Empfangs-Einrichtungen und den landseitigen Sende-Empfangs-Einrichtungen zur Datenübertragung genutzt wird und sendeseitig für zu übertragende Datenpakete eine zweite Lastverteilung zwischen den seeseitigen Sende-Empfangs-Einrichtungen genutzt wird. Die zweite Menge und die erste Menge von paarweise ausgebildeten Datenkommunikations-Verbindungen und / oder die erste Lastverteilung und die zweite Lastverteilung sind voneinander verschieden.

Die geschaffenen Technologien ermöglichen eine adaptive Anpassung der paketvermittelten oder paketbasierten Datenübertragung zwischen den seeseitigen oder schiffseitigen Sende-Empfangs-Einrichtungen auf dem Wasserfahrzeug und den landseitigen Sende-Empfangs-Einrichtungen in Abhängigkeit von aktuellen Übertragungsbedingungen, insbesondere betreffend die aktuelle Übertragungsbedingungen der Luftschnittstellen der jeweiligen Datenkommunikations-Verbindungen zwischen den seeseitigen und den landseitigen Sende-Empfangs-Einrichtungen, die auch als Übertragungskanäle bezeichnet werden können. Die Verteilung der Last (Lastverteilung) auf die Datenkommunikations-Verbindungen wird in Abhängigkeit von den Übertragungsbedingungen einmalig oder auch mehrmals fortdauernd geändert / angepasst. Datenübertragungskanäle werden hierbei zwischen einer see- oder schiffseitigen und einer landseitigen Sende-Empfangs-Einrichtung ausgebildet. Die Sende-Empfangs-Einrichtungen können verallgemeinert auch als Transceiver-Einrichtungen bezeichnet werden.

Die Datenkommunikations-Verbindungen werden zwischen unterschiedlichen Sende-Empfangs-Einrichtungen ausgebildet, sei es mit einem uni- oder einem bidirektionalen Datenübertragungskanal. Sie können hinsichtlich eines oder mehrerer Übertragungsparameter voneinander verschieden sein. Sie können sich zum Beispiel durch unterschiedliche übertragungstechnische Verfahren und / oder Verbindungen über unterschiedliche Netzwerke und / oder unterschiedliche Übertragungsprotokolle und / oder unterschiedliche Parameter desselben Übertragungsprotokoll unterscheiden.

Lösungsgemäß umfasst sowohl die erste Menge als auch die zweite Menge jeweils mindestens zwei paarweise ausgebildete Datenkommunikations-Verbindungen. Zwischen diesen beiden parallelen Datenkommunikations-Verbindungen ist ein Lastausgleich möglich, insbesondere ein dynamischer Lastausgleich im laufenden Betrieb. Wenn eine Datenkommunikations-Verbindung einer Menge ausfällt, steht noch die andere Datenkommunikations-Verbindung derselben Menge zur Verfügung. Außerdem wird eine erste Lastverteilung zwischen den seeseitigen Sende-Empfangs-Einrichtungen durchgeführt, wenn die erste Menge verwendet wird. Eine zweite Lastverteilung zwischen denselben seeseitigen Sende-Empfangs-Einrichtungen wird durchgeführt, wenn die zweite Menge verwendet wird.

Lösungsgemäß wird vom ersten Betriebsmodus in den zweiten Betriebsmodus umgeschaltet, und zwar bevorzugt automatisch, wenn geänderte Übertragungsbedingungen festgestellt worden. Dieses Umschalten umfasst die Schritte, dass die zweite Menge anstelle der ersten Menge verwendet wird und dass die zweite Lastverteilung auf der zweiten Menge anstelle der ersten Lastverteilung auf der ersten Menge durchgeführt wird. Das Verfahren umfasst also sowohl den Schritt, dass innerhalb einer Menge eine Lastverteilung durchgeführt wird, als auch, dass von einer Menge auf eine andere Menge und von einer Methode der Lastverteilung auf eine andere Methode der Lastverteilung umgeschaltet wird.

Die Änderung des Betriebsmodus, also die Änderung der Menge der im Betriebsmodus an den Datenkommunikations-Verbindungen beteiligten Sende-Empfangs-Einrichtungen und / oder die Änderung der der Lastverteilung, aufgrund des Bestimmens geänderter Übertragungsbedingungen kann in Echtzeit erfolgen. Hierdurch ist eine adaptive Echtzeitanpassung der Menge von paarweise ausgebildeten Datenkommunikations-Verbindungen und / oder der aktuellen Verteilung der Last (Lastverteilung) für die zu übermittelnden Datenpakete auf Seiten der seeseitigen Sende-Empfangs-Einrichtungen ermöglicht.

Es kann vorgesehen sein, dass sich bei erneuter oder kontinuierlicher Änderung der Übertragungsbedingungen weitere Wechsel in weitere Betriebsmodi anschließen, die sich in der Menge von paarweise ausgebildeten Datenkommunikations-Verbindungen und / oder der Lastverteilung vom ersten oder vom zweiten Betriebsmodus unterscheiden. Auch kann eine Rückkehr in einen vorherigen Betriebsmodus vorgesehen sein.

Im Unterschied zu einer statischen Konfiguration der für die Datenübertragung genutzten Sende-Empfangs-Einrichtungen auf dem Wasserfahrzeug, einschließlich der Lastverteilung, ermöglichen die vorgeschlagenen Technologien eine fortdauernde Anpassung an sich ändernde Betriebsbedingungen beim Betrieb und Einsatz des Wasserfahrzeugs.

Die geänderten Übertragungsbedingungen können bestimmt werden, während das paketvermittelte Übertragen von Daten über die erste Menge von paarweise ausgebildeten Datenkommunikations-Verbindungen ausgeführt wird. Noch während das paketvermittelte Übertragen von Daten im ersten Betriebsmodus läuft, wird hierbei festgestellt, dass sich die Übertragungsbedingungen geändert haben. Hierauf wird die Datenübertragung in den zweiten Betriebsmodus umgestellt. Es kann vorgesehen sein, die paketvermittelte Datenübertragung gemäß dem ersten Betriebsmodus noch eine gewisse Zeit fortzusetzen, um gegebenenfalls bestimmte Datenübertragungsprozesse abzuschließen. Alternativ kann der Betriebsmodus-Wechsel unmittelbar auf das Bestimmen der geänderten Übertragungsbedingungen erfolgen, wobei paketvermittelte Daten, die laufenden Übertragungsprozessen zugeordnet sind, dann im zweiten Betriebsmodus übertragen werden, um solche Datenübertragungsprozesse abzuschließen, die sich in diesem Fall über den ersten und den zweiten Betriebsmodus erstrecken.

Die geänderten Übertragungsbedingungen können bestimmt werden, nachdem das paketvermittelte Übertragen von Daten über die erste Menge von paarweise ausgebildeten Datenkommunikations-Verbindungen beendet ist. Bei dieser Ausführungsform ist vorgesehen, dass die geänderten Übertragungsbedingungen bestimmt werden, nachdem zuvor der erste Betriebsmodus abgeschlossen ist. Die geänderten Übertragungsbedingungen können hierbei festgestellt werden, wenn aktuell keine Datenübertragung zwischen den seeseitigen und den landseitigen Sende-Empfangs-Einrichtungen stattfindet. Der zweite Betriebsmodus kann dann angewendet werden, wenn eine Datenübertragung neu gestartet wird.

Das Verfahren kann weiterhin Folgendes aufweisen: Koppeln einer lastverteilenden Steuereinrichtung an die seeseitigen Sende-Empfangs-Einrichtungen, Bestimmen der ersten und / oder der zweiten Menge von paarweise ausgebildeten Datenkommunikations-Verbindungen sowie der ersten und / oder der zweiten Lastverteilung mittels einer von der lastverteilenden Steuereinrichtung umfassten Entscheidungslogik und Verteilen von zu übertragenden Datenpakten gemäß der ersten und / oder der zweiten Lastverteilung auf die erste und / oder die zweite Menge von paarweise ausgebildeten Datenkommunikations-Verbindungen mittels einer von der lastverteilenden Steuereinrichtung umfassten Router-Einrichtung. Die Router-Einrichtung kann eine Routing-Instanz implementieren, welche die von der Entscheidungslogik vorgegebene Menge an paarweise ausgebildeten Datenkommunikations-Verbindungen sowie die Lastverteilung für die seeseitigen Sende-Empfangs-Einrichtungen durchsetzt oder umsetzt. Die Entscheidungslogik und die Router-Einrichtung sind bei dieser Ausführungsform gemeinsam in die lastverteilende Steuereinrichtung integriert, die ihrerseits an die seeseitigen Sende-Empfangs-Einrichtungen funktionell koppelt.

Das Verfahren kann weiterhin Folgendes aufweisen: Koppeln eines lastverteilenden Steuerrechners und eines Routers, der getrennt von dem lastverteilenden Steuerrechner gebildet ist, an die seeseitigen Sende-Empfangs-Einrichtungen, Bestimmen der ersten und / oder der zweiten Menge von paarweise ausgebildeten Datenkommunikations-Verbindungen sowie der ersten und / oder der zweiten Lastverteilung mittels des Steuerrechners, welcher eine Entscheidungslogik bereitstellt, und Verteilen von zu übertragenden Datenpakten gemäß der ersten und / oder der zweiten Lastverteilung auf die erste und / oder die zweite Menge von paarweise ausgebildeten Datenkommunikations-Verbindungen mittels des Routers. Bei dieser Ausführungsform sind die Entscheidungslogik und die Routinginstanz (Router) getrennt voneinander gebildet. Die Entscheidungslogik wird mittels des lastverteilenden Steuerrechners implementiert. Der Router übernimmt es dann, die vorgegebene Konfiguration betreffend die zu nutzenden seeseitigen Sende-Empfangs-Einrichtungen sowie die Lastverteilung umzusetzen.

Die erste und / oder die zweite Menge kann jeweils mindestens zwei paarweise ausgebildete Datenkommunikations-Verbindungen umfassen. Die hier beschriebenen Technologien ermöglichen so Betriebsmodi, in denen jeweils mindestens zwei Datenübertragungskanäle zwischen den seeseitigen und den landseitigen Sende-Empfangs-Einrichtungen zur paketvermittelten Datenübertragung verwendet werden. Der Begriff "paarweise ausgebildete Datenkommunikations-Verbindungen" bedeutet: Mindestens zwei Datenübertragungskanäle sind parallel zueinander angeordnet, so dass jeder Datenübertragungskanal Daten zwischen den gleichen Partnern zu übertragen vermag und zwischen den beiden Datenübertragungskanälen eine Lastverteilung durchgeführt werden kann.

In dem ersten und / oder dem zweiten Betriebsmodus können die mindestens zwei paarweise ausgebildeten Datenkommunikations-Verbindungen zeitlich parallel (zeitgleich) zum paketvermittelten Übertragen von Daten genutzt werden. Zeitgleich werden hier mehrere Datenübertragungskanäle (Datenkommunikations-Verbindungen) zwischen den seeseitigen und den landseitigen Sende-Empfangs-Einrichtungen in die paketvermittelte Datenübertragung eingebunden.

Das paketvermittelte Übertragen von Daten kann im ersten und / oder im zweiten Betriebsmodus als flow-basierte Datenpaketübertragung ausgeführt werden. Bei der flow-basierten Datenpaketübertragung können Datenpakete, die einer Sitzung oder einer Session zugeordnet sind, über ein und denselben Datenübertragungskanal zwischen einer der seeseitigen Sende-Empfangs-Einrichtungen und einer der landseitigen Sende-Empfangs-Einrichtungen übertragen werden. Die Übertragung sämtlicher Datenpakete, die der Sitzung beziehungsweise der Session zugeordnet sind, erfolgt über den gleichen Datenübertragungskanal. Wird im Verlauf einer paketvermittelten Datenübertragung zwischen den seeseitigen und den landseitigen Sende-Empfangs-Einrichtung eine Anforderung für eine neue Sitzung / Session empfangen, kann die Zuordnung der neuen Sitzung der aktuellen Lastverteilung entsprechend - im Sinne einer flow-basierten Datenübertragung - zu einem Datenübertragungskanal erfolgen.

Die erste und / oder die zweite Lastverteilung können jeweils verfügbaren Datenübertragungsraten für die seeseitigen Sende-Empfangs-Einrichtungen, die der ersten / zweiten Menge paarweise ausgebildeter Datenkommunikations-Verbindungen zugeordnet sind, entsprechend bestimmt werden. Zum Bestimmen der jeweiligen Lastverteilung kann hierbei eine (aktuell) verfügbare Datenrate für die ausgebildeten Datenübertragungskanäle (Datenkommunikations-Verbindungen) bestimmt werden, um hiervon abgeleitet eine Lastverteilung festzulegen, beispielsweise mittels der Entscheidungslogik. Zum Beispiel können größere zur Datenübertragung anstehende Datenpakete oder eine größere Anzahl von Datenpaketen über einen Datenübertragungskanal übertragen werden, der aktuell eine möglichst hohe verfügbare Datenrate bereitstellt. Das Bestimmen der verfügbaren Datenrate kann beispielsweise mittels Abfragen der Größe einer jeweiligen Warteschlange von zu übertragenden Datenpaketen für die Datenkommunikations-Verbindungen erfolgen. Alternativ kann eine verfügbare Datenrate auch direkt an der Sende- und Empfangsanlage ausgelesen werden. Falls nicht, sind die anderen im Folgenden erläuterten Methoden eine Möglichkeit, um einen Rückschluss auf die Datenrate / Belastung des Datenübertragungskanals zu bekommen. Alternativ oder ergänzend kann eine jeweilige Auslastung für die paarweise ausgebildeten Datenkommunikations-Verbindungen gemessen werden. Die Warteschlangenlänge lässt beispielsweise Rückschlüsse zu, ob ein Datenübertragungskanal mit dem bisher zugeordneten Datenfluss überlastet ist oder nicht. Alternativ oder ergänzend kann der zeitliche Zuwachs einer Warteschlangenlänge, eine Signalstärke, eine geographische Position, eine Kennung der landseitigen Sende-Empfangs-Einrichtung und / oder anfallende Kosten gemessen werden. Auch kann vorgesehen sein, dass bestimmte Datenpakte von der Übertragung gemäß der Lastverteilung ausgeschlossen werden, da sie über bestimmte Datenkommunikations-Verbindungen gesendet werden müssen. Aktive Messungen können zum Beispiel durch die Entscheidungslogik ausgeführt oder veranlasst werden, die einen Rückschluss auf die Auslastung der Datenübertragungskanäle zulassen. Beispielsweise können als Parameter eine Round-Trip-Zeit für Datenpakete einer bestimmten Größe gemessen werden. Alternativ oder ergänzend kann Paketfehlerrate als ein Indikator für die Güte eines Übertragungskanals herangezogen werden.

An der ersten und / oder der zweiten Menge von paarweise ausgebildeten Datenkommunikations-Verbindungen können mindestens zwei oder alle seeseitigen Sende-Empfangs-Einrichtungen beteiligt sein, die für Sende-Empfangstechnologien aus der folgenden Gruppe eingerichtet sind: SHF Satelliten-Kommunikation; VSAT; Mobilfunk; INMARSAT; hafenseitiger Lichtwellenleiter-Anschluss und hafenseitiger DSL-Anschluss.

Bei der SHF Satelliten-Kommunikation handelt es sich um eine satellitengestützte Datenkommunikation im SHF-Band (SHF - *"Super High Frequency"*). VSAT ist ebenfalls eine satellitengestützte Datenkommunikation (VSAT - "*Very Small Aperture Terminal"*). Weiterhin ist INMARSAT ein satellitengestütztes Datenkommunikationssystem, welches die Erdoberfläche weitgehend abdeckt.

Für das paketbasierte Übertragen der Daten kann mindestens ein Protokoll aus der folgenden Gruppe verwendet werden: Ethernet, Internet-Protokoll, TCP ("*Transmission Control Protocol"*) und UDP ("*User Datagram Protocol"*).

Die vorangehend erläuterten alternativen Ausgestaltungen des Verfahrens zur paketvermittelten Datenübertragung können in Verbindung mit der Anordnung von seeseitigen Sende-Empfangs-Einrichtungen auf dem Wasserfahrzeug und landseitigen Sende-Empfangs-Einrichtungen entsprechend vorgesehen sein.

### Beschreibung von Ausführungsbeispielen

Im Folgenden werden weitere Ausführungsbeispiele unter Bezugnahme auf eine Figur näher erläutert.

Die einzige Figur zeigt eine schematische Darstellung einer Anordnung zur paketvermittelten oder paketbasierten Datenübertragung zwischen seeseitigen Sende-Empfangs-Einrichtungen 1.1, ..., 1.n, die auf einem nicht dargestellten Wasserfahrzeug oder Schiff angeordnet sind, sowie landseitigen Sende-Empfangs-Einrichtungen 2.1, ..., 2.m. Zwischen den seeseitigen Sende-Empfangs-Einrichtungen 1.1, ..., 1.n sowie den landseitigen Sende-Empfangs-Einrichtungen 2.1, ..., 2.m sind paarweise Datenkommunikations-Verbindungen 3 über entsprechende Luftschnittstellen ausbildbar, wobei die Datenkommunikations-Verbindungen 3 jeweils einen Datenübertragungskanal bereitstellen, um paketvermittelte Daten zu übertragen.

Die landseitigen Sende-Empfangs-Einrichtungen 2.1, ..., 2.m sind jeweils an ein landseitiges Datenkommunikations-Netzwerk 4 gekoppelt, bei dem es sich beispielsweise um ein IP-Netzwerk (IP - Internet Protocol), ein Vermittlungs-Netzwerk oder ein fest verdrahtetes Netzwerk handeln kann. Das landseitige Datenkommunikations-Netzwerk 4 koppelt an eine landseitige Lastverteileinrichtung 5, die über ein landseitiges Netz 6 mit einer landseitigen Gegenstelle 7 verbunden ist, an die oder von der schließlich eine Datenübertragung erfolgen soll. Die landseitige Lastverteilungs-Einrichtung 5 kann aus einem System bestehen oder alternativ mittels einer Steuereinrichtung mit einem Router gebildet sein.

Auf dem Wasserfahrzeug koppeln die seeseitigen Sende-Empfangs-Einrichtungen 1.1, ..., 1.n an ein seeseitiges Datenkommunikations-Netzwerk 8, bei dem es sich vergleichbar um ein IP-Netzwerk, ein Vermittlungs-Netzwerk oder ein fest verdrahtetes Netzwerk handeln kann. Das seeseitige Datenkommunikations-Netzwerk 8 ist verbunden mit einer seeseitigen Lastverteileinrichtung 9, die über ein seeseitiges Netz 10 an eine seeseitige Gegenstelle 11 koppelt, die mit der landseitigen Gegenstelle 7 Daten austauscht.

Die seeseitige Lastverteileinrichtung 9 weist eine Entscheidungslogik 12 auf, die eingerichtet ist, in Abhängigkeit von aktuellen Betriebsbedingungen einen Betriebsmodus für die paketvermittelte Datenübertragung zwischen den seeseitigen Sende-Empfangs-Einrichtungen 1.1, ..., 1.n und den landseitigen Sende-Empfangs-Einrichtungen 2.1, ..., 2.m zu bestimmen und gegebenenfalls zu ändern, insbesondere in Echtzeit. Auf diese Weise wird der Betriebsmodus adaptiv in Abhängigkeit von den Betriebsbedingungen eingestellt, insbesondere hinsichtlich aktueller Betriebsbedingungen für die Luftschnittstellen. Zum Beispiel kann sich das Signal-Rausch-Verhältnis für einen oder mehrere der Datenkommunikations-Verbindungen 3 verändern, beispielweise verschlechtern. Hierdurch verschlechtern sich die Symbolfehlerrate und damit die Paketfehlerrate, was zur Folge hat, dass die Nutzdatenrate sinkt. Die Paketfehlerrate erhöht sich. Ein weiteres Szenario, sind Probleme im Backbone eines Service-Providers einer Satcom-Anlage. In diesem Fall sind die Satcom-Verbindungen in Ordnung, aber aufgrund von Überlastungen, zum Beispiel auf der Landseite, sinkt die Ende-zu-Ende-Datenrate zur Gegenstelle ab.

Die Entscheidungslogik 12 koppelt gemäß der Figur bei dem gezeigten Ausführungsbeispiel an einer Router 13, zum Beispiel einen Load-Balancing-Router. Dieses Gesamtsystem kann entweder aus zwei Komponenten wie hier geschildert bestehen. Es ist aber auch möglich, dieses System als ein Gerät auszuführen, in dem die beiden Komponenten logisch enthalten sind. Die verschiedenen Ausführungen können auch für die Landseite vorgesehen sein.

Um aktuelle Betriebsbedingungen zu bestimmen, können verschiedene Parameter herangezogen werden. Die Entscheidungslogik 12 kann hierzu Informationen von den seeseitigen Sende-Empfangs-Einrichtungen 1.1, ..., 1.n und / oder der seeseitigen Lastverteil-Einrichtung 9 abfragen. In der Figur ist das schematisch mittels Steuer- oder Signalleitungen 14 und 15 gezeigt. Hierzu gehören beispielsweise Informationen betreffend eine aktuelle Datenübertragungsrate. Diese Information kann zum Beispiel indirekt aus der Bestimmung aktueller Warteschlangen für zu übertragende Datenpakete an den seeseitigen Sende-Empfangs-Einrichtungen 1.1, ..., 1.n abgeleitet werden.

Zum Beispiel kann für die Datenpakete eine Round-Trip-Zeit über alle Sende-Empfangs-Einrichtungen bestimmt werden. Hieraus kann ein neues Verhältnis der Datenraten zueinander abgeleitet werden. Hierauf basierend kann ein Gewichtungsverhältnis für die Zuordnung von Flows verändert werden. Entsprechend werden neue Flows dann entsprechend dem neuen Gewichtungsverhältnis den Übertragungskanälen zugeordnet. Somit ergibt sich nach einiger Zeit eine Lastverteilung der Flows angepasst an die neue Gewichtung.

Hat die Entscheidungslogik 12 eine Gruppe von seeseitigen Sende-Empfangs-Einrichtungen bestimmt und eine Lastverteilung festgelegt, kann über eine Steuerleitung 16 der Betrieb der seeseitigen Lastverteil-Einrichtung 9 entsprechend geändert / eingestellt werden, um so auf eine aktuelle Änderung der Betriebsbedingungen zu reagieren. Insbesondere kann dies mithilfe einer neu angepassten Metrik erfolgen, die dann von dem Router 13 für die aktuelle paketvermittelte Datenübertragung umzusetzen ist.

Die Entscheidungslogik 12 und der Router 13 können alternativ als getrennte Funktionseinheiten auf dem Wasserfahrzeug implementiert werden.

Die in der vorstehenden Beschreibung, den Ansprüchen sowie der Figur offenbarten Merkmale können sowohl einzeln als auch in beliebiger Kombination für die Verwirklichung der verschiedenen Ausführungen von Bedeutung sein.

**Bezugszeichen**

| | |
|---|---|
| 1.1, ..., 1.n | seeseitige Sende-Empfangs-Einrichtungen |
| 2.1, ..., 2.m | landseitige Sende-Empfangs-Einrichtungen |
| 3 | Datenkommunikations-Verbindungen |
| 4 | landseitiges Datenkommunikations-Netzwerk |
| 5 | landseitige Lastverteil-Einrichtung |
| 6 | landseitiges Netz |
| 7 | landseitige Gegenstelle |
| 8 | seeseitiges Datenkommunikations-Netzwerk |
| 9 | seeseitige Lastverteil-Einrichtung |
| 10 | seeseitiges Netz |
| 11 | seeseitige Gegenstelle |
| 12 | Entscheidungslogik |
| 13 | Router |
| 14, 16 | Steuerleitung |
| 15 | Signalleitung |

## Patentansprüche

1. Verfahren zur paketvermittelten Datenübertragung zwischen seeseitigen Sende-Empfangs-Einrichtungen (1.1, ..., 1.n) auf einem Wasserfahrzeug und landseitigen Sende-Empfangs-Einrichtungen (2.1, ..., 2.m) über Luftschnittstellen, aufweisend:
- Bereitstellen von seeseitigen Sende-Empfangs-Einrichtungen (1.1, ..., 1.n) auf einem Wasserfahrzeug;
- Bereitstellen von landseitigen Sende-Empfangs-Einrichtungen (2.1, ..., 2.m);
- paketvermitteltes Übertragen von Daten von den seeseitigen Sende-Empfangs-Einrichtungen (1.1, ..., 1.n) an die landseitigen Sende-Empfangs-Einrichtungen (2.1, ..., 2.m) in einem ersten Betriebsmodus, bei dem
- eine erste Menge von paarweise ausgebildeten Datenkommunikations-Verbindungen über erste Luftschnittstellen zwischen den seeseitigen Sende-Empfangs-Einrichtungen (1.1, ..., 1.n) und den landseitigen Sende-Empfangs-Einrichtungen (2.1, ..., 2.m) zur paketvermittelten Datenübertragung genutzt wird und
- sendeseitig für zu übertragende Datenpakete eine erste Lastverteilung zwischen den seeseitigen Sende-Empfangs-Einrichtungen (1.1, ..., 1.n) angewendet wird;
- Bestimmen von geänderten Übertragungsbedingungen für die erste Menge von paarweise ausgebildeten Datenkommunikations-Verbindungen; und
- als Reaktion auf das Bestimmen der geänderten Übertragungsbedingungen, paketvermitteltes Übertragen von Daten von den seeseitigen Sende-Empfangs-Einrichtungen (1.1, ..., 1.n) an die landseitigen Sende-Empfangs-Einrichtungen (2.1, ..., 2.m) in einem zweiten Betriebsmodus, bei dem
- eine zweite Menge von paarweise ausgebildeten Datenkommunikations-Verbindungen über zweite Luftschnittstellen zwischen den seeseitigen Sende-Empfangs-Einrichtungen (1.1, ..., 1.n) und den landseitigen Sende-Empfangs-Einrichtungen (2.1, ..., 2.m) zur Datenübertragung genutzt wird und
- sendeseitig für zu übertragende Datenpakete eine zweite Lastverteilung zwischen den seeseitigen Sende-Empfangs-Einrichtungen (1.1, ..., 1.n) genutzt wird;
wobei die zweite Menge und die erste Menge von paarweise ausgebildeten Datenkommunikations-Verbindungen voneinander verschieden sind.

2. Verfahren nach Anspruch 1
**dadurch gekennzeichnet, dass**
die geänderten Übertragungsbedingungen bestimmt werden, während das paketvermittelte Übertragen von Daten über die erste Menge von paarweise ausgebildeten Datenkommunikations-Verbindungen ausgeführt wird.

3. Verfahren nach Anspruch 1 oder 2,
**dadurch gekennzeichnet, dass**
die geänderten Übertragungsbedingungen bestimmt werden, nachdem das paketbasierte Übertragen von Daten über die erste Menge von paarweise ausgebildeten Datenkommunikations-Verbindungen beendet ist.

4. Verfahren nach mindestens einem der vorangehenden Ansprüche,
**gekennzeichnet durch**
- Koppeln einer lastverteilenden Steuereinrichtung an die seeseitigen Sende-Empfangs-Einrichtungen (1.1, ..., 1.n);
- Bestimmen der ersten und / oder der zweiten Menge von paarweise ausgebildeten Datenkommunikations-Verbindungen sowie der ersten und / oder der zweiten Lastverteilung mittels einer von der lastverteilenden Steuereinrichtung umfassten Entscheidungslogik; und
- Verteilen von zu übertragenden Datenpakten gemäß der ersten und / oder der zweiten Lastverteilung auf die erste und / oder die zweite Menge von paarweise ausgebildeten Datenkommunikations-Verbindungen mittels einer von der lastverteilenden Steuereinrichtung umfassten Router-Einrichtung.

5. Verfahren nach mindestens einem der Ansprüche 1 bis 4,
**gekennzeichnet durch**
- Koppeln eines lastverteilenden Steuerrechners und eines Routers, der getrennt von dem Steuerrechner gebildet ist, an die seeseitigen Sende-Empfangs-Einrichtungen (1.1, ..., 1.n);
- Bestimmen der ersten und / oder der zweiten Menge von paarweise ausgebildeten Datenkommunikations-Verbindungen sowie der ersten und / oder der zweiten Lastverteilung mittels des Steuerrechners, welcher eine Entscheidungslogik bereitstellt; und
- Verteilen von zu übertragenden Datenpaketen gemäß der ersten und / oder der zweiten Lastverteilung auf die erste und / oder die zweite Menge von paarweise ausgebildeten Datenkommunikations-Verbindungen mittels des Routers.

6. Verfahren nach mindestens einem der vorangehenden Ansprüche,
**dadurch gekennzeichnet, dass**
die erste und / oder die zweite Menge mindestens zwei paarweise ausgebildete Datenkommunikations-Verbindungen umfassen.

7. Verfahren nach Anspruch 6,
**dadurch gekennzeichnet, dass**
in dem ersten und / oder dem zweiten Betriebsmodus die mindestens zwei paarweise ausgebildeten Datenkommunikations-Verbindungen zeitlich parallel zum paketvermittelten Übertragen von Daten genutzt werden.

8. Verfahren nach mindestens einem der vorangehenden Ansprüche,
**dadurch gekennzeichnet, dass**
das paketvermittelte Übertragen von Daten im ersten und / oder im zweiten Betriebsmodus als flow-basierte Datenpaket-Übertragung ausgeführt wird.

9. Verfahren nach mindestens einem der vorangehenden Ansprüche,
**dadurch gekennzeichnet, dass**
die erste und / oder die zweite Lastverteilung jeweils verfügbaren Datenübertragungsraten für die seeseitigen Sende-Empfangs-Einrichtungen (1.1, ..., 1.n), die der ersten / zweiten Menge paarweise ausgebildete Datenkommunikations-Verbindungen zugeordnet sind, entsprechend bestimmt werden.

10. Verfahren nach mindestens einem der vorangehenden Ansprüche,
**dadurch gekennzeichnet, dass**
an der ersten und / oder der zweiten Menge von paarweise ausgebildeten Datenkommunikations-Verbindungen mindestens zwei oder alle seeseitigen Sende-Empfangs-Einrichtungen (1.1, ..., 1.n) beteiligt sind, die für Sende-Empfangstechnologien aus der folgenden Gruppe eingerichtet sind: SHF Satelliten-Kommunikation; VSAT; Mobilfunk; INMARSAT; hafenseitiger Lichtwellenleiter-Anschluss; hafenseitiger DSL-Anschluss; ...

11. Verfahren nach mindestens einem der vorangehenden Ansprüche,
**dadurch gekennzeichnet, dass**
für das paketvermittelte Übertragen der Daten mindestens ein Protokoll aus der folgenden Gruppe verwendet wird: Ethernet, Internet-Protokoll, UDP ("*User Datagram Protocol"*) und TCP ("*Transmission Control Protocol"*)*.*

12. Verfahren nach mindestens einem der vorangehenden Ansprüche,
**dadurch gekennzeichnet, dass**
die erste Lastverteilung und die zweite Lastverteilung voneinander verschieden sind.

13. Anordnung zur paketvermittelten Datenübertragung, mit
- seeseitigen Sende-Empfangs-Einrichtungen (1.1, ..., 1.n) auf einem Wasserfahrzeug und
- landseitigen Sende-Empfangs-Einrichtungen (2.1, ..., 2.m);
wobei die seeseitigen Sende-Empfangs-Einrichtungen (1.1, ..., 1.n) und die landseitigen Sende-Empfangs-Einrichtung eingerichtet sind, über Luftschnittstellen ein Verfahren zur paketvermittelten Datenübertragung mit den folgenden Schritten auszuführen:
- paketvermitteltes Übertragen von Daten von den seeseitigen Sende-Empfangs-Einrichtungen (1.1, ..., 1.n) an die landseitigen Sende-Empfangs-Einrichtungen (2.1, ..., 2.m) in einem ersten Betriebsmodus, bei dem
- eine erste Menge von paarweise ausgebildeten Datenkommunikations-Verbindungen über erste Luftschnittstellen zwischen den seeseitigen Sende-Empfangs-Einrichtungen (1.1, ..., 1.n) und den landseitigen Sende-Empfangs-Einrichtungen (2.1, ..., 2.m) zur paketvermittelten Datenübertragung genutzt wird und
- sendeseitig für zu übertragende Datenpakete eine erste Lastverteilung zwischen den seeseitigen Sende-Empfangs-Einrichtungen (1.1, ..., 1.n) angewendet wird;
- Bestimmen von geänderten Übertragungsbedingungen für die erste Menge von paarweise ausgebildeten Datenkommunikations-Verbindungen; und
- als Reaktion auf das Bestimmen der geänderten Übertragungsbedingungen, paketvermitteltes Übertragen von Daten von den seeseitigen Sende-Empfangs-Einrichtungen (1.1, ..., 1.n) an die landseitigen Sende-Empfangs-Einrichtungen (2.1, ..., 2.m) in einem zweiten Betriebsmodus, bei dem
- eine zweite Menge von paarweise ausgebildeten Datenkommunikations-Verbindungen über zweite Luftschnittstellen zwischen den seeseitigen Sende-Empfangs-Einrichtungen (1.1, ..., 1.n) und den landseitigen Sende-Empfangs-Einrichtungen (2.1, ..., 2.m) zur Datenübertragung genutzt wird und
- sendeseitig für zu übertragende Datenpakete eine zweite Lastverteilung zwischen den seeseitigen Sende-Empfangs-Einrichtungen (1.1, ..., 1.n) genutzt wird;
wobei die zweite Menge und die erste Menge von paarweise ausgebildeten Datenkommunikations-Verbindungen voneinander verschieden sind.

## Claims

1. Method for packet-switched data transmission between marine-side transceivers (1.1, ..., 1.n) on a watercraft and land-side transceivers (2.1, ..., 2.m) via air interfaces, comprising:
- providing marine-side transceivers (1.1, ..., 1.n) on a watercraft;
- providing land-side transceivers (2.1, ..., 2.m);
- packet-switched transmission of data from the marine-side transceivers (1.1, ..., 1.n) to the land-side transceivers (2.1, ..., 2.m) in a first operating mode, in which
- a first set of data communication connections formed in pairs via first air interfaces between the marine-side transceivers (1.1, ..., 1.n) and the land-side transceivers (2.1, ..., 2.m) is used for the packet-switched data transmission and
- a first load distribution between the marine-side transceivers (1.1, ..., 1.n) is applied on the transmitting side for data packets to be transmitted;
- determining changed transmission conditions for the first set of data communication connections formed in pairs; and
- as a reaction to determining the changed transmission conditions, packet-switched transmission of data from the marine-side transceivers (1.1, ..., 1.n) to the land-side transceivers (2.1, ..., 2.m) in a second operating mode, in which
- a second set of data communication connections formed in pairs via second air interfaces between the marine-side transceivers (1.1, ..., 1.n) and the land-side transceivers (2.1, ..., 2.m) is used for the data transmission and
- a second load distribution between the marine-side transceivers (1.1, ..., 1.n) is used on the transmitting side for data packets to be transmitted;
the second set and the first set of data communication connections formed in pairs being different from one another.

2. Method according to Claim 1,
**characterized in that**
the changed transmission conditions are determined while the packet-switched transmission of data via the first set of data communication connections formed in pairs is being carried out.

3. Method according to Claim 1 or 2,
**characterized in that**
the changed transmission conditions are determined after the packet-based transmission of data via the first set of data communication connections formed in pairs has ended.

4. Method according to at least one of the preceding claims,
**characterized by**
- coupling a load-distributing control device to the marine-side transceivers (1.1, ..., 1.n);
- determining the first and/or the second set of data communication connections formed in pairs and also the first and/or the second load distribution by means of a decision logic comprised by the load-distributing control device; and
- distributing data packets to be transmitted in accordance with the first and/or the second load distribution among the first and/or the second set of data communication connections formed in pairs by means of a router device comprised by the load-distributing control device.

5. Method according to at least one of Claims 1 to 4, **characterized by**
- coupling a load-distributing control computer and a router, formed separately from the control computer, to the marine-side transceivers (1.1, ..., 1.n);
- determining the first and/or the second set of data communication connections formed in pairs and also the first and/or the second load distribution by means of the control computer, which provides a decision logic; and
- distributing data packets to be transmitted in accordance with the first and/or the second load distribution among the first and/or the second set of data communication connections formed in pairs by means of the router.

6. Method according to at least one of the preceding claims,
**characterized in that**
the first and/or the second set comprise at least two data communication connections formed in pairs.

7. Method according to Claim 6,
**characterized in that**
in the first and/or the second operating mode the at least two data communication connections formed in pairs are used temporally in parallel for the packet-switched transmission of data.

8. Method according to at least one of the preceding claims,
**characterized in that**
the packet-switched transmission of data in the first and/or in the second operating mode is carried out as flow-based data packet transmission.

9. Method according to at least one of the preceding claims,
**characterized in that**
the first and/or the second load distribution are/is determined according to respectively available data transmission rates for the marine-side transceivers (1.1, ..., 1.n) assigned to the first/second set of data communication connections formed in pairs.

10. Method according to at least one of the preceding claims,
**characterized in that**
at least two or all of the marine-side transceivers (1.1, ..., 1.n) configured for transceiver technologies from the following group participate in the first and/or the second set of data communication connections formed in pairs: SHF satellite communication; VSAT; mobile radio; INMARSAT; harbour-side optical waveguide connection; harbour-side DSL-connection; ...

11. Method according to at least one of the preceding claims,
**characterized in that**
at least one protocol from the following group is used for the packet-switched transmission of the data: Ethernet, internet protocol, UDP ("*User Datagram Protocol"*) and TCP (*"Transmission Control Protocol"*)*.*

12. Method according to at least one of the preceding claims,
**characterized in that**
the first load distribution and the second load distribution are different from one another.

13. Arrangement for packet-switched data transmission, comprising
- marine-side transceivers (1.1, ..., 1.n) on a watercraft and
- land-side transceivers (2.1, ..., 2.m);
wherein the marine-side transceivers (1.1, ..., 1.n) and the land-side transceiver are configured to carry out, via air interfaces, a method for packet-switched data transmission comprising the following steps:
- packet-switched transmission of data from the marine-side transceivers (1.1, ..., 1.n) to the land-side transceivers (2.1, ..., 2.m) in a first operating mode, in which
- a first set of data communication connections formed in pairs via first air interfaces between the marine-side transceivers (1.1, ..., 1.n) and the land-side transceivers (2.1, ..., 2.m) is used for the packet-switched data transmission and
- a first load distribution between the marine-side transceivers (1.1, ..., 1.n) is applied on the transmitting side for data packets to be transmitted;
- determining changed transmission conditions for the first set of data communication connections formed in pairs; and
- as a reaction to determining the changed transmission conditions, packet-switched transmission of data from the marine-side transceivers (1.1, ..., 1.n) to the land-side transceivers (2.1, ..., 2.m) in a second operating mode, in which
- a second set of data communication connections formed in pairs via second air interfaces between the marine-side transceivers (1.1, ..., 1.n) and the land-side transceivers (2.1, ..., 2.m) is used for the data transmission and
- a second load distribution between the marine-side transceivers (1.1, ..., 1.n) is used on the transmitting side for data packets to be transmitted;
the second set and the first set of data communication connections formed in pairs being different from one another.

## Revendications

1. Procédé de transmission de données par commutation de paquets entre des dispositifs d'émission-réception côté mer (1.1, ..., 1.n) sur un véhicule nautique et des dispositifs d'émission-réception côté terre (2.1, ..., 2.m) par le biais d'interfaces hertziennes, comprenant :
- la mise à disposition de dispositifs d'émission-réception côté mer (1.1, ..., 1.n) sur un véhicule nautique ;
- la mise à disposition de dispositifs d'émission-réception côté terre (2.1, ..., 2.m) ;
- la transmission par commutation de paquets de données des dispositifs d'émission-réception côté mer (1.1, ..., 1.n) aux dispositifs d'émission-réception côté terre (2.1, ..., 2.m) dans un premier mode de fonctionnement, avec lequel
- une première quantité de liaisons de communication de données configurées par paires par le biais de premières interfaces hertziennes entre les dispositifs d'émission-réception côté mer (1.1, ..., 1.n) et les dispositifs d'émission-réception côté terre (2.1, ..., 2.m) est utilisée pour la transmission de données par commutation de paquets et
- une première distribution de charge entre les dispositifs d'émission-réception côté mer (1.1, ..., 1.n) est utilisée côté émission ;
- la détermination de conditions de transmission modifiées pour la première quantité de liaisons de communication de données configurées par paires ; et
- en réaction à la détermination des conditions de transmission modifiées, la transmission par commutation de paquets de données des dispositifs d'émission-réception côté mer (1.1, ..., 1.n) aux dispositifs d'émission-réception côté terre (2.1, ..., 2.m) dans un deuxième mode de fonctionnement, avec lequel
- une deuxième quantité de liaisons de communication de données configurées par paires par le biais de deuxièmes interfaces hertziennes entre les dispositifs d'émission-réception côté mer (1.1, ..., 1.n) et les dispositifs d'émission-réception côté terre (2.1, ..., 2.m) est utilisée pour la transmission de données et
- une deuxième distribution de charge entre les dispositifs d'émission-réception côté mer (1.1, ..., 1.n) est utilisée côté émission ;
la deuxième quantité et la première quantité de liaisons de communication de données configurées par paires étant différentes l'une de l'autre.

2. Procédé selon la revendication 1, **caractérisé en ce que** les conditions de transmission modifiées sont déterminées pendant que la transmission par commutation de paquets de données est effectuée par le biais de la première quantité de liaisons de communication de données configurées par paires.

3. Procédé selon la revendication 1 ou 2, **caractérisé en ce que** les conditions de transmission modifiées sont déterminées après que la transmission basée sur des paquets de données par le biais de la première quantité de liaisons de communication de données configurées par paires a été terminée.

4. Procédé selon au moins l'une des revendications précédentes, **caractérisé par**
- le couplage d'un dispositif de commande distributeur de charge aux dispositifs d'émission-réception côté mer (1.1, ..., 1.n) ;
- la détermination de la première et/ou de la deuxième quantité de liaisons de communication de données configurées par paires ainsi que de la première et/ou la deuxième distribution de charge au moyen d'une logique de décision comprise par le dispositif de commande distributeur de charge ; et
- la distribution des paquets de données à transmettre conformément à la première et/ou la deuxième distribution de charge sur la première et/ou la deuxième quantité de liaisons de communication de données configurées par paires au moyen d'un dispositif routeur compris par le dispositif de commande distributeur de charge.

5. Procédé selon au moins l'une des revendications 1 à 4, **caractérisé par**
- le couplage d'un ordinateur de commande distributeur de charge et d'un routeur, qui est formé séparément de l'ordinateur de commande, aux dispositifs d'émission-réception côté mer (1.1, ..., 1.n) ;
- la détermination de la première et/ou de la deuxième quantité de liaisons de communication de données configurées par paires ainsi que de la première et/ou la deuxième distribution de charge au moyen de l'ordinateur de commande, lequel met à disposition une logique de décision ; et
- la distribution des paquets de données à transmettre conformément à la première et/ou la deuxième distribution de charge sur la première et/ou la deuxième quantité de liaisons de communication de données configurées par paires au moyen du routeur.

6. Procédé selon au moins l'une des revendications précédentes, **caractérisé en ce que** la première et/ou la deuxième quantité comprennent au moins deux liaisons de communication de données configurées par paires.

7. Procédé selon la revendication 6, **caractérisé en ce que** dans le premier et/ou le deuxième mode de fonctionnement, les au moins deux liaisons de communication de données configurées par paires sont utilisées parallèlement dans le temps pour la transmission de données par commutation de paquets.

8. Procédé selon au moins l'une des revendications précédentes, **caractérisé en ce que** la transmission de données par commutation de paquets dans le premier et/ou le deuxième mode de fonctionnement est effectuée sous la forme d'une transmission de paquets de données basée sur le flux.

9. Procédé selon au moins l'une des revendications précédentes, **caractérisé en ce que** la première et/ou la deuxième distribution de charge sont déterminées respectivement en conséquence en fonction des débits de transmission de données pour les dispositifs d'émission-réception côté mer (1.1, ..., 1.n) qui sont associés à la première/la deuxième quantité de liaisons de communication de données configurées par paires.

10. Procédé selon au moins l'une des revendications précédentes, **caractérisé en ce qu'**au moins deux ou la totalité des dispositifs d'émission-réception côté mer (1.1, ..., 1.n) participent à la première et/ou la deuxième quantité de liaisons de communication de données configurées par paires, lesquels sont conçus pour les technologies d'émission-réception du groupe suivant : communication par satellite SHF ; VSAT ; radiocommunication mobile ; INMARSAT ; branchement à fibres optiques côté port ; branchement DSL côté port ; ...

11. Procédé selon au moins l'une des revendications précédentes, **caractérisé en ce qu'**au moins un protocole du groupe suivant est utilisé pour la transmission de données par commutation de paquets : Ethernet, protocole Internet, UDP (« User Datagram Protocol » - Protocole datagramme d'utilisateur) et TCP (« Transmission Control Protocol » - Protocole de commande de transmission).

12. Procédé selon au moins l'une des revendications précédentes, **caractérisé en ce que** la première distribution de charge et la deuxième distribution de charge sont différentes l'une de l'autre.

13. Arrangement de transmission de données par commutation de paquets, comprenant
- des dispositifs d'émission-réception côté mer (1.1, ..., 1.n) sur un véhicule nautique et
- des dispositifs d'émission-réception côté terre (2.1, ..., 2.m) ;
les dispositifs d'émission-réception côté mer (1.1, ..., 1.n) et les dispositifs d'émission-réception côté terre étant conçus pour mettre en œuvre, par le biais d'interfaces hertziennes, un procédé de transmission de données par commutation de paquets comprenant les étapes suivantes :
- transmission par commutation de paquets de données des dispositifs d'émission-réception côté mer (1.1, ..., 1.n) aux dispositifs d'émission-réception côté terre (2.1, ..., 2.m) dans un premier mode de fonctionnement, avec lequel
- une première quantité de liaisons de communication de données configurées par paires par le biais de premières interfaces hertziennes entre les dispositifs d'émission-réception côté mer (1.1, ..., 1.n) et les dispositifs d'émission-réception côté terre (2.1, ..., 2.m) est utilisée pour la transmission de données par commutation de paquets et
- une première distribution de charge entre les dispositifs d'émission-réception côté mer (1.1, ..., 1.n) est utilisée côté émission ;
- détermination de conditions de transmission modifiées pour la première quantité de liaisons de communication de données configurées par paires ; et
- en réaction à la détermination des conditions de transmission modifiées, transmission par commutation de paquets de données des dispositifs d'émission-réception côté mer (1.1, ..., 1.n) aux dispositifs d'émission-réception côté terre (2.1, ..., 2.m) dans un deuxième mode de fonctionnement, avec lequel
- une deuxième quantité de liaisons de communication de données configurées par paires par le biais de deuxièmes interfaces hertziennes entre les dispositifs d'émission-réception côté mer (1.1, ..., 1.n) et les dispositifs d'émission-réception côté terre (2.1, ..., 2.m) est utilisée pour la transmission de données et
- une deuxième distribution de charge entre les dispositifs d'émission-réception côté mer (1.1, ..., 1.n) est utilisée côté émission ;
la deuxième quantité et la première quantité de liaisons de communication de données configurées par paires étant différentes l'une de l'autre.
